# EUROPEAN PATENT APPLICATION

(11) **EP 2 119 499 A1**
(43) Date of publication of application: **18.11.2009**
(21) Application number: 08155310.9
(22) Date of filing: 28.04.2008
(51) Int. Cl.: B01J 19/30, C02F 3/10

(54) **Biofilm carrier used in waste water purification**

(71) Applicant: Dytras, S.A., 41700 Dos Hermanas, Sevilla (ES)
(72) Inventor: Cassillas Ovando, Álvaro, 41700, Dos Hermanas, Sevilla (ES); Coca Sánchez, Rafael Evaristo, 41700, Dos Hermanas, Sevilla (ES); Candau Romero, Álvaro, 41700, Dos Hermanas, Sevilla (ES)
(74) Representative: Pons Ariño, Angel

(57) **Abstract**

Made of plastic material, it comprises an exterior body (2), in the form of a truncated cone, and an interior body (3), in the form of a truncated cone, housed within the exterior body (2), connected to the exterior body (2) and separated therefrom by interior ribs (8) disposed within the interior body (3) and by exterior ribs (4) located between the interior body (3) and the exterior body (2). It has protective fins (7) whereupon bound biomass may be generated. It comprises channels (6), serving for binding of biological material defined between the exterior body (2) and the interior body (3) and between the exterior ribs (4), and defined between the interior body (3), the central axial axis (5) and the interior ribs (8).

## Description

### OBJECT OF THE INVENTION

This invention relates to the field of treatment of water, waste water, sewage or sludge. More specifically, the invention is focused on a supporting element for biomass that is to be used in the biological treatment of waste water.

### BACKGROUND OF THE INVENTION

Microorganisms grow in waste water, feeding on organic matter and nutrients accumulated in said waste water and thus contribute to the purification thereof.

In the conditions that are normally found in nature, the purifying action of these microorganisms, so-called self-purification or natural biological purification, is not sufficient to completely remove all the contaminants present in waste water. This is due to factors such as the lack of a sufficiently large population of microorganisms, the absence of an adequate level of oxygenation or a low degree of contact between the water and the microorganisms.

With the aim of resolving these deficiencies, there are so-called biological waste water purification processes, created by mankind, where those aspects that are limited in nature are enhanced, such as the low concentration of microorganisms, deficiency of oxygen or a low degree of contact. In this way, efficient purification systems are created based on microorganisms carried by waste water.

When waste water enters a water purification plant, it undergoes a pre-treatment wherein solids and large-sized particles are removed, together with sands and fats, Then the water passes to the so-called primary treatment, where easily sedimentable solids in suspension are removed along with some organic material.

The organic material that remains dissolved and in suspension, as well as the other solid particles that have not been removed by the previous treatments, are now removed by means of the so-called Biological Purification Processes.

The Biological Purification Processes can be defined as those performed by a specific group of microorganisms (mainly bacteria and protozoa) that, in the presence of Oxygen, act on the dissolved organic and inorganic colloidal matter, suspended in the waste water, transforming it into gases and cellular material that can be easily separated by means of sedimentation. The combination of organic matter, bacteria and mineral substances forms flocculates and the combination of flocculates is known as biological sludge.

The objectives of this type of treatment are the transformation of organic matter and the coagulation and removal of non-sedimentable colloidal solids. In the case of some urban waste waters, an object is to also remove Nitrogen and Phosphorus. Lastly, the concentrations of pathogenic and faecal microorganisms, which may occur in waste water, are also reduced.

Biological purification processes are classified in two main groups according to the criteria followed to ensure an adequate concentration of microorganisms: activated sludge processes and fixed film processes.

In the activated sludge processes, microorganisms, such as sludge in suspension, are concentrated in a reactor by means of a re-circulation current coming from the water/sludge separation system at the end of the process. In the activated sludge process, therefore, two fundamental parts can be distinguished: the reactor and the settling tank. The reactor is the place where the required population of microorganisms is found, in the form of sludge in suspension, and receives waste water for purification. It is equipped with aeration and stirring systems in order to provide the oxygen that the microorganisms need to carry our their activity and to guarantee a sufficient degree of mixing which assures that the microorganisms come into contact with the various substances (organic matter and nutrients) present in the waste water.

The activity taking place in the reactor favours the formation of flocculates by the microorganisms and these are separated from the now purified water by means of a sedimentation process. This is carried out in the settling tank. The sedimented sludge is parity re-circulated to the reactor in order to maintain an adequate concentration of microorganisms, and partly purged in order to compensate for the continuous growth of the population.

In fixed film processes, microorganisms are concentrated on the surface of a support medium over which the water to be purified is circulated. Microorganisms multiply and are retained in the reactor due to certain structures or support media that keep the microorganisms secured, independent of the continuous flow of water through the reactor and without the need for re-circulation. The types of fixed film processes are very varied, depending on many factors, such as the type of structure used as a support medium, its location with respect to the water to be treated and the system of aeration used. The main drawback of these types of processes lies in the need to guarantee that the water to be treated passes through the entire support medium where the colonies of microorganisms responsible for purification are growing. Systems using beds of support material in suspension are the fixed film systems that have been most frequently developed in recent years. In these, the support medium is made up of small plastic elements that remain in suspension in the interior of the reactor. In addition to aeration and stirring systems, screens are installed in the exit channels in order to prevent the outflow of the support elements.

In fact, these types of systems of beds of support material in suspension have led to the development of biological purification processes that can be called hybrid or mixed wherein fixed biological cultures (bound to support material in suspension) and biological cultures in suspension are contained in the same activated sludge reactor to which support material elements are added.

Whether they are used in a conventional fixed film process or in a hybrid "fixed-suspension" process, the elements making up the support material must have two main functional characteristics. On one hand, they must provide the maximum amount of useful surface for the growth of bound biomass in the smallest volume possible. On the other hand, they must guarantee optimum flow conditions enabling that the totality of the bound biomass is in continual contact with the waste water to be purified. These are two opposing objectives that inventions made up to now have tried to resolve with some degree of compromise tending towards one side or the other.

The supporting elements developed to date consist of plastic cylindrical or truncated, cone-shaped rings, provided with a series of interior partitions and/or exterior fins, manufactured by extrusion procedures.

Thus, Spanish patent of document ES2064083, of the KALDNES MILJOTEKNOLOGI AS company, shows a method for the purification of water where the reactor contains suspended elements carrying the biological material, made from soft plastic, in tubular form, with internal separation walls and protection against erosion of the biological film, allowing the passage of water through the element. Said elements feature some additional characteristics expressed in ranges of length, density and useful surface area occupied by the biological material.

Likewise, Spanish patent of document ES2274195, of the ANOXKALDNES AS company, presents a method for the biological purification of water, wherein the reactor contains mobile vehicles for the growth of a biomass film that contains passages made from walls to enable the flow of water. Said vehicles are protected against collision with other vehicles and feature additional characteristics expressed in ranges of the dimensions of the said element and the fundamental parts thereof and of the useful surface area with respect to the volume of the element.

In Spanish patent of document ES2135718, of the Anox Biosystem AB company, a biofilm support is disclosed for the purification of waste water that is in the form of a cylinder open at both ends and that has at least four diametrical ribs that fill the whole length of the cylinder. The cylinder can be drilled and the diametrical ribs can, in turn, contain consecutive ribs forming an acute or right angle with the diametrical ribs. It is recommended that the length of the cylinder is not greater than its diameter.

In the British patent of document GB1498360, of the Norton Company, filling elements are disclosed for biological fitters used in the purification of contaminated liquids and other outflows. Each element is composed of three tubular walls with an open end or in the form of a truncated, hollow cone that is extended over the length of the central axis of the element. One of these is an exterior wall; the second wall is situated inside the exterior wall and separated therefrom. The third wall is an intermediate wall situated between the interior and exterior walls and connected thereto. At least two of the three walls are inclined with respect to the central axis.

As has previously been mentioned, the functional efficiency of the elements described in the state of the art is based on a compromise between offering a large surface area specifically for the growth of microorganisms and simultaneously allowing a fluid circulation (without obstruction) of water through the interior of the elements. Elements of smaller size feature the advantage of offering a large surface area specifically for colonisation. However, they frequently show problems of blockage due to the growth of biomass in their interior channels. In said circumstances, water ceases to flow through the interior and the large amount of biomass that has been generated stops being useful for purification, as its contact with waste water is severely restricted. In addition, the screens and sieves necessary to prevent the escape of these biological reactor elements, with very small mesh size, also gives rise to periodical problems of blockage and jams that make continuous supervision thereof essential. Support elements of larger size, on the other hand, minimise the problems of blockage due to growth of biomass, but at the cost of sacrificing specific surface area, they provide for the growth thereof.

### DESCRIPTION OF THE INVENTION

In view of the documents cited above and taking into account the need to obtain highly-efficient elements, this patent presents a biofilm carrier for application in the biological purification of waste water. It consists of two hollow bodies, in the form of truncated cones, whose largest and smallest diameters are different between the two bodies and where one of the bodies, called the interior, is situated inside the other body, called the exterior body, positioned coaxially with respect to the common axis, with both bodies being inter-connected and separated by interior joining ribs, which start from the axis common to both bodies and/or the outer surface of the interior body, channels suitable for the circulation of water through the interior and the exterior body being formed between said nerves. Additionally, the exterior body features fins located on its outer surface.

The interior channels of the biofilm carrier create a hydraulic flow profile which has the special feature that the water accelerates in its circulation from the section of larger area towards the section of smaller area. In this way, a two-fold advantage is obtained. On one hand, the higher velocity of water in the sections with smaller area contributes to limit the growth of biomass in these zones of smaller area due to shearing forces, while the gradual acceleration of water helps to maintain a constant flow of water through the element. On the other hand, the larger area of the interior channels encourages the detachment of bound biomass before there is a total blockage by said biomass, in the same way that the demoulding of any conical shape is favoured.

The arrangement of the fins on the outer surface of the exterior body results in the two-fold advantage of serving as protection for the elements against impact with each other and providing additional surface area available for the growth of microorganisms.

The location of the ribs and their number is designed, both in positioning and size, to optimise the rigidity of the element, the size of the surface area for growth of microorganisms and the circulation of water without obstruction.

The fact that the two conical bodies that make up the element of the invention are not in direct connection with each other has the advantage, with respect to that disclosed by the patent document GB1498360, of allowing more freedom for the flow of water in the hollow that exists between the bodies. In the elements disclosed in the patent of invention GB1498360, the flow is exclusively reduced to the limited space in the windows made in the walls of the cylindrical or conical bodies.

The existing relationships between the geometrical sizes that define the element of the invention are such that values of specific surface area for the growth of biomass and conditions of water flow through the elements, taken together, are more favourable than the group of elements disclosed in documents comprising the state of the art mentioned previously, and without reducing the rigidity of the elements.

### DESCRIPTION OF THE DRAWINGS

In order to complement the description that is being made and with the aim of helping to a better understanding of the characteristics of the invention, together with a preferred example of a practical embodiment thereof, a set of illustrative and non-limitative drawings is included as an integral part of said description.

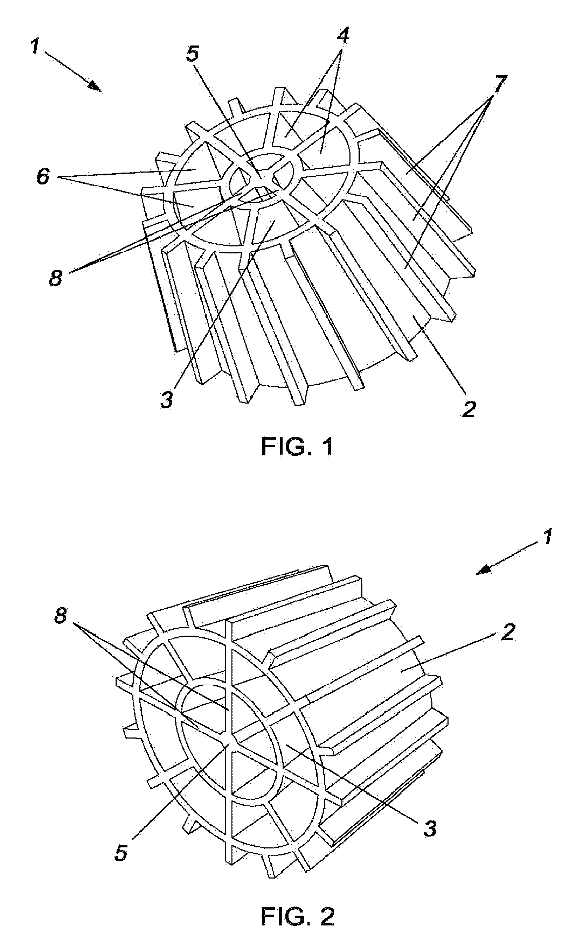

Figure 1. - Shows a perspective view of the support element of the invention, with the smaller bases of the interior and exterior bodies to the front.
Figure 2. - Shows a perspective view of the support element of the invention, with the larger bases of the interior and exterior bodies to the front.

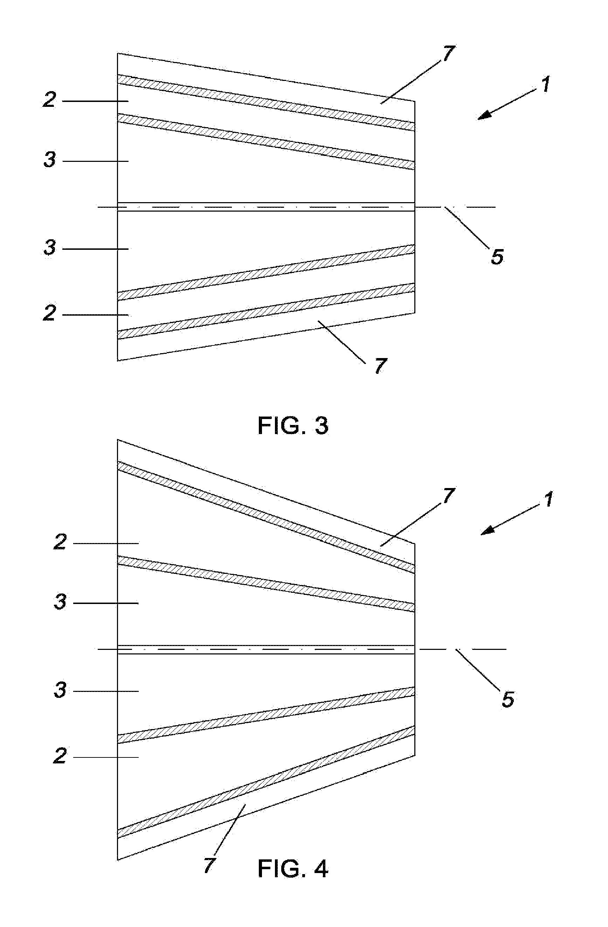

Figure 3. - Shows a lateral view of the support element of the invention in longitudinal cross-section for the case of the interior and exterior bodies in parallel.
Figure 4. - Shows a lateral view of the support element of the invention in longitudinal cross-section for the case of the interior and exterior bodies not in parallel.

### PREFERRED EMBODIMENT OF THE INVENTION

The biofilm carrier (1) for application to biological purification of waste water object of this invention, is defined as a single, conically-shaped piece made of plastic material by means of an injection moulding process, or any other suitable manufacturing process. For geometrically descriptive purposes, the following parts of the piece that forms the biofilm carrier (1) of the invention may be distinguished:
- an exterior body (2) with a hollow, truncated, conical form,
- an interior body (3) with a hollow, truncated, conical form. The diameters of the larger and smaller bases are less than the diameters of the larger and smaller bases of the exterior body (2), respectively. The interior body (3) is located coaxially inside the interior of the exterior body (2) and both bodies (2, 3) have the same orientation,
- some ribs (4, 8) providing rigidity to the biofilm carrier (1), which additionally provide a surface for binding of biological material, situated radially along the whole length of the central axial axis (5) of the biofilm carrier (1), arranged throughout the interior of the interior body (3) and/or in the space between the interior body (3) and the exterior body (2) and which make up a set of axial channels (6) for the flow of water, and
- fins (7) arranged on the outer surface of the exterior body (2), serving as protection for the biofilm carrier (1) against impacts and as an additional surface for the establishment of microorganisms.

The density of the compound that is used to make the biofilm carrier (1) of the invention has a value similar to that of the density of water, so that the biofilm carrier (1) may remain suspended in the water. The density of the biofilm carrier (1) is preferably between 850 kg/m³ and 1150 kg/m³.

The ribs (4, 8) consist of interior ribs (8), that are distributed radially within the interior body (3), and exterior ribs (4) that are distributed in the space between the interior body (3) and the exterior body (2), extending in length between the bases of the bodies (2 and 3).

In a preferred embodiment of the invention, the number of interior ribs is four and the number of exterior ribs is eight.

The biofilm carrier (1) of the invention additionally comprises channels (6), serving for binding of biological material, between the exterior body (2) and the interior body (3) and between the exterior ribs (4) as well as between the interior body (3), the central axial axis (5) and the interior ribs (8).

The fins (7) are of uniform thickness, of between 1 and 5 millimetres, preferably 2 millimetres. The fins (7) are preferably disposed along the length of the generatrices of the outer surface of the exterior body (2) without interruptions along the whole of its length. However, there is also the possibility that the fins (7) are interrupted or even compose individual spans, and also that their arrangement over the outer surface of the exterior body (2) does not follow the line of the generatrix. This would be the case, for example, of fins (7) whose orientation forms a constant angle with the common axis (5) of the bodies, describing a spiral on the outer surface of the exterior body (2).

The thicknesses of the ribs (4) and of the walls of the bodies (2, 3) are not uniform, but increase from the smaller bases towards the larger bases of the bodies (2, 3). This characteristic features the advantage of facilitating the demoulding of the piece. In any case, this thickness is preferably between 0.2 millimetres and 1 millimetre.

The angle of the cone (angle formed by the generatrices of the cone of the exterior body (2) with the central axial axis (5) of the cone) is less than 30° and preferably takes a value close to 15°.

According to a preferred embodiment of the invention, the bodies (2, 3) are parallel.

The length of the support element (1) is preferably between 15 and 30 millimetres.

The smaller base of the exterior body (2) is of diameter between 15 and 25 millimetres, preferably 20 millimetres.

The ratio between the diameters of the larger bases of both bodies, as well as between those of the smaller bases of both bodies is preferably close to 2.

The configuration and the dimensions of the biofilm carrier (1) of the invention are such that the biofilm carrier (1) is suitable for use in biological purification of waste water procedures wherein a value for the surface area specifically designated for the growth of microorganisms is between 250 and 350 m² per m³ of apparent volume of the biofilm carrier (1), preferably of a value close to 300 m² per m³ of the apparent volume of the biofilm carrier (1).

## Claims

1. Biofilm carrier (1) for bound biomass used in the biological purification of waste water, made of plastic material, that comprises:
- an exterior body (2) with a hollow, truncated, conical form,
- an interior body (3) with a hollow, truncated, coaxial and conical form, inside the exterior body (2),
- a central axial axis (5), and
- ribs (4, 8) providing rigidity,
**characterised in that**
the diameters of the larger and smaller bases of the interior body (3) are, respectively, less than the diameters of the larger and smaller bases of the exterior body (2); both bodies (2, 3) are separated and disposed in the same diverging orientation; ribs (4, 8) consisting of interior ribs (8) that are radially distributed within the interior body (3) and exterior ribs (4) that are distributed in the space between the interior body (3) and the exterior body (2), extending between the bases of the bodies (2, 3); additionally comprising channels (6), serving for binding of biological material defined between the exterior body (2) and the interior body (3) and between the exterior ribs (4), and defined between the interior body (3), the central axial axis (5) and the interior ribs (8).

2. Biofilm carrier (1) according to claim 1, **characterised in that** the bodies (2, 3) are parallel.

3. Biofilm carrier (1) according to claims 1 and 2, **characterised in that** the exterior ribs (4) are distributed as a radial prolongation of the interior ribs (8) and in intermediate angular positions with respect to the interior ribs (8).

4. Biofilm carrier (1) according to any of the claims 1 to 3, **characterised in that** it additionally includes fins (7) arranged on the outer surface of the exterior body (2), serving as protection for the Biofilm carrier (1) against impacts and as an additional surface for the establishment of microorganisms.

5. Biofilm carrier (1) according to any of the claims 1 to 4, **characterised in that** the thickness of the fins has a value of between 1 and 5 millimetres.

6. Biofilm carrier (1) according to claim 5, **characterised in that** the thickness of the fins has a value of 2 millimetres.

7. Biofilm carrier (1) according to any of the claims 1 to 6, **characterised in that** the angle of the cone of the exterior body (2) is less than 30°.

8. Biofilm carrier (1) according to any of the claims 1 to 7, **characterised in that** the density of the material of which the support element (1) is constructed is between 850 and 1150 kg/m³.

9. Biofilm carrier (1) according to any of the claims 1 to 8, **characterised in that** it has a length of between 15 and 30 millimetres.

10. Biofilm carrier (1) according to any of the claims 1 to 9, **characterised in that** the ratio between the diameters of the smaller bases of the two bodies (2, 3) is 2.

11. Biofilm carrier (1) according to any of the claims 1 to 10, **characterised in that** the diameter of the smaller base of the exterior body is between 15 and 25 millimetres.

12. Biofilm carrier (1) according to claim 11, **characterised in that** the diameter of the smaller base of the exterior body is 20 millimetres.

13. Biofilm carrier (1) according to any of the claims 1 to 12, **characterised in that** the specific surface area designated for the growth of microorganisms is between 250 and 350 m² per m³ of the apparent volume.

14. Support element (1) according to claim 13, **characterised in that** the specific surface area designated for the growth of microorganisms takes the value of 300 m² per m³ of apparent volume.

15. Support element (1) according to any of the claims 1 to 14, **characterised in that** the thickness of the bodies (2, 3) and the ribs (4, 8) increases from the smaller base to the larger base.

16. Support element (1) according to any of the claims 1 to 15, **characterised in that** the thickness of the bodies (2, 3) and the ribs (4, 8) is between 0.2 millimetres and 1 millimetre.

## Amended claims

### Amended claims in accordance with Rule 137(2) EPC.

**1.** Biofilm carrier (1) for bound biomass used in the biological purification of waste water, made of plastic material, that comprises:
- an exterior body (2) with a hollow, truncated, conical form,
- an interior body (3) with a hollow, truncated, coaxial and conical form, inside the exterior body (2),
- a central axial axis (5), and
- ribs (4, 8) providing rigidity, consisting of interior ribs (8) that are radially distributed within the interior body (3), and exterior ribs (4) that are distributed in the space between the interior body (3) and the exterior body (2),
wherein the diameters of the larger and smaller bases of the interior body (3) are respectively, less than the diameters of the larger and smaller bases of the exterior body (2), and wherein both bodies (2, 3) are separated and disposed in the same diverging orientation,
- inner channels (10), for binding of biological material, delimited by the interior ribs (8), the interior body (3) and the axis (5), and
- outer channels (11), for binding of biological material, delimited by the exterior body (2), the interior body (3) and the exterior ribs (4), **characterised in that** said channels (10, 11) extend between the bases of both bodies (2, 3), and the bodies (2, 3) delimiting said channels (10, 11) comprise solid walls, wherein the exterior body (2) includes fins (7) extending from both bases having elevated ends, said fins (7) arranged on the outer surface of said exterior body (2), serving as protection for the biofilm carrier (1) against impacts.

**2.** Biofilm carrier (1) according to claim 1, **characterised in that** the bodies (2, 3) are parallel.

**3.** Biofilm carrier (1) according to claims 1 and 2, **characterised in that** the exterior ribs (4) are distributed as a radial prolongation of the interior ribs (8) and in intermediate angular positions with respect to the interior ribs (8).

**4.** Biofilm carrier (1) according to any of the claims 1 to 3, **characterised in that** the thickness of the fins has a value of between 1 and 5 millimetres.

**5.** Biofilm carrier (1) according to claim 4, **characterised in that** the thickness of the fins has a value of 2 millimetres.

**6.** Biofilm carrier (1) according to any of the claims 1 to 5, **characterised in that** the angle of the cone of the exterior body (2) is less than 30°.

**7.** Biofilm carrier (1) according to any of the claims 1 to 6, **characterised in that** the density of the material of which the support element (1) is constructed is between 850 and 1150 kg/m³.

**8.** Biofilm carrier (1) according to any of the claims 1 to 7, **characterised in that** it has a length of between 15 and 30 millimetres.

**9.** Biofilm carrier (1) according to any of the claims 1 to 8, **characterised in that** the ratio between the diameters of the smaller bases of the two bodies (2, 3) is 2.

**10.** Biofilm carrier (1) according to any of the claims 1 to 9, **characterised in that** the diameter of the smaller base of the exterior body is between 15 and 25 millimetres.

**11.** Biofilm carrier (1) according to claim 10, **characterised in that** the diameter of the smaller base of the exterior body is 20 millimetres.

**12.** Biofilm carrier (1) according to any of the claims 1 to 11, **characterised in that** the specific surface area designated for the growth of microorganisms is between 250 and 350 m² per m³ of the apparent volume.

**13.** Biofilm carrier (1) according to claim 12, **characterised in that** the specific surface area designated for the growth of microorganisms takes the value of 300 m² per m³ of apparent volume.

**14.** Biofilm carrier (1) according to any of the claims 1 to 13, **characterised in that** the thickness of the bodies (2, 3) and the ribs (4, 8) increases from the smaller base to the larger base.

**15.** Biofilm carrier (1) according to any of the claims 1 to 14, **characterised in that** the thickness of the bodies (2, 3) and the ribs (4, 8) is between 0.2 millimetres and 1 millimetre.
